# EUROPEAN PATENT SPECIFICATION

(11) **EP 4 744 985 B1**
(45) Date of publication and mention of the grant of the patent: **02.12.2026**
(21) Application number: 24213509.3
(22) Date of filing: 18.11.2024
(51) Int. Cl.: B60T 17/00, B01D 53/26

(54) **VEHICULAR AIR DRYER, PNEUMATIC VEHICLE SYSTEM, VEHICLE AND METHOD OF CONTROLLING A PNEUMATIC VEHICLE SYSTEM**
FAHRZEUGLUFTTROCKNER, PNEUMATISCHES FAHRZEUGSYSTEM, FAHRZEUG UND VERFAHREN ZUR STEUERUNG EINES PNEUMATISCHEN FAHRZEUGSYSTEM
DESSICCATEUR D'AIR POUR VÉHICULE, SYSTÈME DE VÉHICULE PNEUMATIQUE, VÉHICULE ET PROCÉDÉ DE COMMANDE D'UN SYSTÈME DE VÉHICULE PNEUMATIQUE

(43) Date of publication of application: 20.05.2026
(73) Proprietor: ZF CV Systems Europe BV, 1170 Brüssel (BE)
(72) Inventor: SEMENIUK, Maciej, 58-506 Jelenia Gora (PL); PENDZICH, Kevin, 30161 Hannover (DE); CHAMOT, Marcin, 54-611 Wroclaw (PL)
(74) Representative: Copi, Joachim

(56) References cited:
- EP-B1- 3 436 295
- CN-A- 102 198 364

## Description

The present disclosure relates to a vehicular air dryer. Furthermore, the present disclosure relates to a pneumatic vehicle system, a vehicle and a method of controlling a pneumatic vehicle system.

Many vehicles comprise one or several pneumatic consumers, such as brake cylinders, height adjustment cylinders, and/or a sensor cleaning system, without being limited thereto. To provide compressed air to a pneumatic consumer system, a compressor may be provided. For various types of pneumatic consumers, it is desirable that the humidity of compressed air is reduced prior to providing the compressed air to the pneumatic consumer. A vehicular air dryer comprising a desiccant cartridge may be installed downstream of the compressor. Vehicular air dryer systems may be configured to provide a desiccant regeneration.

EP 3 436 295 B1 discloses a compressed-air feed system for operating a pneumatic system comprising a compressed-air supply, a compressed-air connection to the pneumatic system, a ventilation connection to surroundings, and a pneumatic main line between the compressed-air supply and the compressed-air connection. The pneumatic main line has an air dryer and a regeneration throttle.

Generally, the vehicular air dryer system may comprise a dryer inlet configured to receive air from a compressor discharge line, a dryer outlet configured to supply dried air, a dryer exhaust and a desiccant cartridge connected or connectable to the dryer inlet via an inlet line and to the dryer outlet via an outlet line, the desiccant cartridge being configured to be selectively operated in a drying mode and in a regeneration mode. In the drying mode, a humid compressed airflow provided by the compressor may be guided through the desiccant cartridge, wherein the desiccant in the desiccant cartridge is configured to adsorb moisture from the humid compressed airflow. Since the desiccant may reach a saturated condition after having adsorbed a certain level of moisture, the desiccant cartridge may be regenerated in the regeneration mode. In the regeneration mode, a comparatively dry regeneration airflow is guided through the desiccant which consequently may desorb moisture to the regeneration airflow. The regeneration airflow may be guided through the desiccant cartridge in a reversed flow direction compared to the compressed airflow. The regeneration airflow may be vented via the dryer exhaust. The desiccant may, for instance, be a suitable adsorbent as e.g. zeolite. Since the desiccant may be prone to degradation, the desiccant cartridge may be configured to be exchangeable and may be replaced after a certain amount of drying and regeneration cycles.

Although available air dryers may already provide well-developed air drying concepts, the technology still holds potential for improved air dryer performance and efficiency. In particular, it may be desirable to increase the regeneration efficiency of vehicular air dryers for enhanced drying performance and air quality optimization as well as for increased service life of the vehicular air dryer. At the same time, it may be worthwhile to provide vehicular air dryer concepts being simple and of low technical complexity for facilitated implementation and reasonable maintenance effort. Furthermore, it may be desirable to provide air drying concepts being more flexible for adaptive operation according to varying drying conditions.

In view of the above, it is an object of the present invention to provide a vehicular air dryer with improved air drying efficiency, low complexity and adaptive operation modes. It is a further object of the present invention to provide an improved pneumatic vehicle system, an enhanced vehicle and a suitable method of controlling a pneumatic vehicle system.

Aspects and embodiments of the invention provide a vehicular air dryer, a pneumatic vehicle system comprising the vehicular air dryer, a vehicle comprising the pneumatic vehicle system and a method of controlling the pneumatic vehicle system as indicated in the appended claims.

According to a first aspect of the present invention, there is provided a vehicular air dryer, comprising:
- a dryer inlet configured to receive air from a compressor discharge line,
- a dryer outlet configured to supply dried air,
- a dryer exhaust,
- **a desiccant** cartridge connected or connectable to the dryer inlet via an inlet line and to the dryer outlet via an outlet line, the desiccant cartridge being configured to be selectively operated in a drying mode and in a regeneration mode, wherein
   ∘ in the drying mode, the desiccant cartridge is configured to receive and dry the air from the dryer inlet and to provide the dried air for outputting via the dryer outlet, and
   ∘ in the regeneration mode, the desiccant cartridge is configured to receive and humidify regeneration air from the outlet line and/or from a regeneration port via a regeneration line and to vent humidified regeneration air via the dryer exhaust,
wherein the vehicular air dryer comprises at least two regeneration lines and wherein the vehicular air dryer is configured to provide a variable amount of regeneration air to the desiccant cartridge operated in the regeneration mode by selectively providing the regeneration air to the desiccant cartridge via at least one of the regeneration lines.

In simple terms, there is provided a vehicular air dryer being configured to use variable amounts of regeneration air for regenerating the desiccant cartridge by selecting at least one of a plurality of available regeneration air paths for adaptive regeneration air supply to the desiccant cartridge. For instance, the amount of regeneration air may be changed by using one or two regeneration lines at the same time, by connecting the regeneration lines to different regeneration air sources and/or by providing regeneration lines with different flow properties, as e.g. comprising different line cross-sections or at least one restriction element.

The vehicular air dryer according to the first aspect of the present invention has the advantage that an amount of regeneration air may be controlled and optionally varied for optimized regeneration processes, leading to an enhanced and consistent drying performance. In particular, excess regeneration air supply may be prevented in operation modes of the air dryer in which the desiccant cartridge can be efficiently regenerated with a comparable small amount of regeneration air, thus avoiding unnecessary regeneration air losses. Furthermore, insufficient regeneration air supply may be prevented in operation modes of the air dryer in which the desiccant cartridge requires a comparable large amount of regeneration air for being efficiently regenerated, thus avoiding decreased drying performance due to incomplete desiccant regeneration. As a result, using variable regeneration air amounts may assist in achieving an improved air dryer performance, increased air dryer lifetime, higher operation flexibility and saving energy, since the regeneration air supply may be adjusted to a current need and excess regeneration airflows can be avoided. Furthermore, it may be easy to implement more than one regeneration line in the vehicular air dryer with a low number of additional components, thus enabling air dryer concepts of low constructional complexity.

In accordance with the present disclosure, the vehicular air dryer may generally be a structural unit implemented in a vehicle or suitable for implementation in a vehicle for receiving and drying compressed air in order to provide dried compressed air to a pneumatic consumer system. The vehicle may be a motor vehicle of any type designed to transport people and/or cargo. In particular, the vehicle may be a commercial vehicle, i.e. a vehicle commercially used for carrying goods or fare-paying passengers. For instance, the commercial vehicle may be a truck or a bus. At least some of the described components of the vehicular air dryer may be arranged within a housing of the vehicular air dryer. The vehicular air dryer may comprise further air processing peripherals such as a protection valve assembly or an air filter. The vehicular air dryer may furthermore comprise a purge valve for selectively venting the compressor discharge line and/or the desiccant cartridge being operated in the regeneration mode, a heater for a purge valve area in which the purge valve is arranged, and/or an outlet check valve for preventing backflow from the dryer outlet.

The vehicular air dryer comprises a desiccant cartridge having a desiccant. Depending on a vehicle type and/or on a selected desiccant material and its degradation properties, the desiccant cartridge may be provided as an exchangeable cartridge. The desiccant may be configured to remove moisture from an airflow flowing through the desiccant by means of an adsorption process. Upon reaching a certain saturation point, it may be necessary to regenerate the desiccant by a suitable desorption process. Generally, regeneration of the desiccant may be performed by leading a dry regeneration airflow through the desiccant. The dry regeneration airflow removes moisture from the desiccant and the humidified regeneration airflow may be vented via the dryer exhaust. Hence, the desiccant cartridge is operable in a drying mode for drying the received compressed air and in a regeneration mode for being regenerated with received regeneration air.

In accordance with the present invention, at least two different regeneration paths may be provided of which at least one may be selectively blocked or opened. For instance, a dryer-internal and/or a dryer-external valve may be provided for selective blocking or opening at least one regeneration line, thus enabling to supply regeneration airflows to the desiccant cartridge in a controlled way with a variable regeneration air amount. For supplying regeneration air, internal and/or external regeneration air sources may be used, as e.g. by providing a diverted airflow of dried compressed air from the outlet line and/or from a dryer-external supply line connected to the dryer outlet and/or by using a dryer-internal or dryer-external buffer storing dried compressed air as a regeneration air source. With regard to dryer-external regeneration air sources, a respective regeneration port may be provided at the housing of the vehicular air dryer for fluidical connection of a dryer-external regeneration air source to the vehicular air dryer. Within the present disclosure, a dryer-external component may be arranged outside a housing of the vehicular air dryer and a dryer-internal component may be arranged inside the housing of the vehicular air dryer.

According to an embodiment of the first aspect of the present invention, at least one of the regeneration lines may comprise a regeneration airflow restriction element arranged therein. As restriction elements enable well-defined airflow control, they may provide a simple and efficient option to supply different amounts of regeneration air via the regeneration lines. The regeneration airflow restriction element may represent a further option for regeneration air amount variation in addition to using one or more regeneration lines at the same time. In accordance with the present disclosure, the regeneration airflow restriction element may be a pneumatic component configured to reduce a pressure in or an airflow through a regeneration line. For instance, the regeneration airflow restriction element may be configured as a restriction orifice or a pressure regulator.

According to a refined embodiment, the vehicular air dryer may comprise a first regeneration line having a first regeneration airflow restriction element arranged therein and a second regeneration line having a second regeneration airflow restriction element arranged therein, wherein the vehicular air dryer may be configured to selectively provide regeneration air to the desiccant cartridge operated in the regeneration mode via the first regeneration airflow restriction element arranged in the first regeneration line and/or via the second regeneration airflow restriction element arranged in the second regeneration line. Hence, the regeneration airflow restriction elements may enable well-defined airflow control with significant increase or decrease of the resulting regeneration airflow reaching the desiccant cartridge by single selection or combination of the first and second regeneration lines. In this regard, at least one of the first regeneration line and/or the second regeneration line may be configured to be selectively blocked or opened for supplying a variable amount of regeneration air. For instance, at least one valve may be arranged in at least one of the first regeneration line and/or the second regeneration line and configured for selectively blocking or opening the first regeneration line and/or the second regeneration line.

According to a refined embodiment, the vehicular air dryer may comprise a third regeneration line having a third regeneration airflow restriction element arranged therein, wherein the vehicular air dryer may be configured to selectively provide regeneration air to the desiccant cartridge operated in the regeneration mode via the first regeneration airflow restriction element arranged in the first regeneration line, via the second regeneration airflow restriction element arranged in the second regeneration line and/or via the third regeneration airflow restriction element arranged in the third regeneration line. If more than two regeneration lines can be used for a supply of regeneration air to the desiccant cartridge, more variation options may be provided regarding the supply of different regeneration air amounts to the desiccant cartridge. In addition, the first, second and third regeneration airflow restriction elements may promote a fine-tuned airflow control, for instance by providing regeneration paths allowing small, intermediate and large regeneration airflows being selected or combined for supplying regeneration air to the desiccant cartridge. Generally, a number of regeneration lines and a number of regeneration airflow restriction elements may not be limited to three. Accordingly, more than three regeneration paths may be implemented in the vehicular air dryer for further regeneration airflow optimization.

According to an embodiment of the first aspect of the present invention, at least one of the first regeneration airflow restriction element, the second regeneration airflow restriction element and the third regeneration airflow restriction element may comprise a restriction orifice, thus providing a simple, effective and inexpensive solution for airflow restriction which may be easy to implement. The restriction orifice may be formed in a restriction orifice plate which can be installed in the regeneration line in a simple manner. For some applications, it may be useful to provide an exchangeable restriction orifice plate in order to change a restriction orifice size if needed.

According to a refined embodiment, at least two regeneration airflow restriction elements of the first regeneration airflow restriction element, the second regeneration airflow restriction element and the third regeneration airflow restriction element may each comprise a restriction orifice, wherein the restriction orifices of the at least two regeneration airflow restriction elements may have different orifice sizes. In particular, all regeneration airflow restriction elements of the first regeneration airflow restriction element, the second regeneration airflow restriction element and the third regeneration airflow restriction element may comprise a restriction orifice, wherein the restriction orifices of all regeneration airflow restriction elements may have different orifice sizes. For instance, the regeneration airflow restriction elements may comprise orifice sizes corresponding to a small orifice size, an intermediate orifice size and a large orifice size compared to each other. Different orifice sizes may enable well-defined airflow control with significant increase or decrease of the resulting regeneration airflow depending on the orifice size, thus allowing to provide variable amounts of regeneration air to the desiccant cartridge in a simple and effective manner.

According to an embodiment of the first aspect of the present invention, at least one of the first regeneration line, the second regeneration line and the third regeneration line may be configured as a bypass line of the outlet line. The bypass line may be configured to be connected to the outlet line and to bypass an outlet check valve arranged in the outlet line for preventing backflow from the dryer outlet. With a bypass line, a simple and effective supply of regeneration air to the desiccant cartridge via a dryer-internal regeneration path may be provided. The regeneration line configured as a bypass line may represent a standard regeneration path in the described regeneration line arrangement. For instance, it may be configured to be permanently open, while further regeneration paths may be configured to be selectively opened or blocked. In this way, it is not required, although possible, to arrange a valve in the regeneration line configured as a bypass line.

According to an embodiment of the first aspect of the present invention, at least one of the first regeneration line, the second regeneration line and the third regeneration line may be connected to a regeneration port of the vehicular air dryer. The regeneration port may represent a pneumatic dryer port for external regeneration air supply. The regeneration port may be configured to be connected to a dryer-external regeneration air source, such as a buffer or a supply line supplying dried air to a pneumatic consumer system. The regeneration port may be configured to be connected to the dryer-external regeneration air source via a regeneration air supply line. Preferably, a regeneration air supply valve may be arranged in the regeneration air supply line or in the vehicular air dryer for selective opening or blocking the regeneration line for a regeneration airflow flowing through the regeneration port and/or the regeneration line. By connecting at least one regeneration line to the regeneration port, high flexibility regarding regeneration airflow supply may be provided without significantly increasing the complexity of the air dryer. Since external regeneration air may be provided to the dryer, in particular additionally to a dryer-internal regeneration air supply, more variation options may be given for providing different regeneration air amounts to the desiccant cartridge. Moreover, using more than one regeneration port may further increase the regeneration airflow variation options and flexibility of the described vehicular air dryer.

According to an embodiment of the first aspect of the present invention, at least one of the first regeneration line, the second regeneration line and the third regeneration line may comprise a regeneration control valve arranged therein. In this way, a precise and well-defined airflow control with fast switching times may be achieved. The regeneration control valve may represent a dryer-internal control valve, thus providing an enhanced vehicular air dryer with internal control architecture for direct regeneration airflow control. Preferably, the regeneration control valve may be electrically controllable, for instance by being implemented as a solenoid valve, without being limited thereto and without excluding pneumatic control solutions. The regeneration control valve may be configured to selectively open or block the respective regeneration line using a dryer-internal valve component. The respective regeneration line may be configured as a bypass line or as a further bypass line of the outlet line.

According to an embodiment of the first aspect of the present invention, the vehicular air dryer may comprise a further desiccant cartridge connected or connectable to the dryer inlet via a further inlet line and to the dryer outlet via a further outlet line, wherein the desiccant cartridge and the further desiccant cartridge may be configured to be alternately operated in the drying mode and in the regeneration mode and wherein the vehicular air dryer may be configured to selectively provide regeneration air to the desiccant cartridge or to the further desiccant cartridge via at least one of the regeneration lines. In this way, a twin chamber configuration may be provided, according to which the desiccant cartridges may be operated in a complementary manner. Since the suggested regeneration concept using at least two regeneration lines increases the drying performance of the vehicular air dryer by optimized regeneration, it may be particularly beneficial for twin chamber configurations, in which the supplied regeneration airflows may be adapted to present switching cycles for alternating operation of the desiccant cartridges. The vehicular air dryer may comprise a switching valve configured to actively switch the desiccant cartridges to the drying mode or the regeneration mode. For instance, the switching valve may be controlled according to predefined cycle times or based on sensor values. Preferably, the switching valve may be a pneumatically controlled valve being controllable by a switching control valve. For instance, the switching valve may be a pneumatic valve and the switching control valve may be a solenoid valve. The desiccant cartridges may comprise individual regeneration lines for separate regeneration airflow supply. Preferably, the desiccant cartridges may share at least one common regeneration line or at least one common regeneration line section in order to provide a compact arrangement. Generally, the vehicular air dryer may comprise more than two desiccant cartridges for increased drying performance. Hence, the present invention is not limited to single and twin chamber concepts, but may be also applied to triple and higher chamber configurations. Air dryer configurations comprising at least two desiccant cartridges may be also referred to as multiple chamber configurations.

According to the present disclosure, the vehicular air dryer may comprise at least one of a purge valve, a regeneration control valve and a switching valve. The purge valve may be configured to selectively vent the compressor discharge line and/or the desiccant cartridge being operated in the regeneration mode upon receiving a respective purge control signal. The regeneration control valve may be configured to selectively open or block a regeneration line in which the regeneration control valve is arranged. The switching valve may be configured to switch a desiccant cartridge and at least one further desiccant cartridge to the drying mode or to the regeneration mode in a multiple chamber configuration. According to an optional configuration, at least one of the purge valve, the regeneration control valve and the switching valve may be configured as a pneumatically controlled valve. According to a further optional configuration, at least one of the purge valve, the regeneration control valve and the switching valve may be configured as an electrically controlled valve, such as a solenoid valve. According to a further optional configuration, at least one of the purge valve, the regeneration control valve and the switching valve may be configured as pneumatically controlled valve controllable by an electrically controlled control valve. For instance, a pneumatic purge valve may be controlled via a purge valve control port connected to a compressor control line for being controlled in coordination with the compressor operation. Alternatively, the pneumatic purge valve may be connected to an electrically controllable purge control valve. For instance, a pneumatic switching valve may be connected to an electrically controllable switching control valve. At least one of the purge valve, the regeneration control valve and the switching valve may be configured as a 2/2 way valve, thus providing a simple, compact and cost-efficient valve structure.

According to an embodiment of the first aspect of the present invention, the vehicular air dryer may comprise an individual control port for at least one of the purge valve, the regeneration control valve and the switching valve. The control port may be configured to directly control the purge valve, the regeneration control valve or the switching valve or to indirectly control the purge valve, the regeneration control valve or the switching valve via an associated control valve. Depending on the control concept of the purge valve, the regeneration control valve or the switching valve, the control port may be a pneumatic control port or an electrical control port.

According to an embodiment of the first aspect of the present invention, the vehicular air dryer may comprise at least two of a purge valve, a regeneration control valve and a switching valve, wherein the vehicular air dryer comprises a common signal control port for controlling at least two of the purge valve, the regeneration control valve and the switching valve. The common control port may be configured to directly control at least two of the purge valve, the regeneration control valve and the switching valve and/or to indirectly control at least two of the purge valve, the regeneration control valve and the switching valve via an associated control valve. Preferably, the common control port may be configured as an electrical control port and at least one of the purge valve, the regeneration control valve, the switching valve and/or an associated control valve may be configured as a solenoid valve. The common control port may be connected to an electronic control unit (ECU) for finely tuned valve control according to predefined control conditions. The common control port may allow to provide a compact control solution for the vehicular air dryer with well-coordinated valve actuation.

According to a second aspect of the present invention, there is provided a pneumatic vehicle system, comprising:
- a compressor,
- the vehicular air dryer according to the first aspect or any embodiment of the vehicular air dryer disclosed herein,
- a pneumatic consumer system,
- a compressor discharge line connected to a discharge port of the compressor and the dryer inlet,
- a supply line connected to the dryer outlet and the pneumatic consumer system, and
- a control unit configured to control operation of the vehicular air dryer.

The pneumatic vehicle system according to the second aspect of the present invention may provide increased operation efficiency due to high quality air supplied by the improved vehicular air dryer comprised by the pneumatic vehicle system. The vehicular air dryer providing enhanced regeneration and drying performance may contribute to an enhanced operability and a longer lifetime of components being part of the pneumatic vehicle system, such as e.g. the pneumatic consumer system. The pneumatic consumer system may, for instance, be a pneumatic or electropneumatic braking system, levelling system, tire inflation system or sensor cleaning system. Preferably, the control unit is configured as an electronic control unit (ECU). The control unit may be configured to control at least one of a purge valve, a regeneration control valve, a switching valve and a regeneration air supply valve of the vehicular air dryer or of the pneumatic vehicle system. In particular, the control unit may be configured to control the operation of the vehicular air dryer such that at least one desiccant cartridge of the vehicular air dryer may selectively be operated in a drying mode or a regeneration mode. Preferably, the control unit is configured to control operation of the vehicular air dryer in coordination with the compressor and the pneumatic consumer system, thus enabling optimized timing and airflow control in the pneumatic vehicle system.

According to an embodiment of the second aspect of the present invention, the pneumatic vehicle system may further comprise a regeneration air supply line connected to a regeneration port of the vehicular air dryer and being configured to selectively provide regeneration air to the regeneration port. In this way, external regeneration to the vehicular air dryer may optionally be supplied, thus providing more variation options for the intended supply of different regeneration air amounts to the vehicular air dryer. The regeneration air supply line may be connected to a dryer-external regeneration air source, such as e.g. a buffer or the supply line connected to the dryer outlet and to the pneumatic consumer system. Preferably, a regeneration air supply valve may be arranged in the regeneration air supply line, the regeneration air supply valve being configured to selectively block or open a fluid connection in the regeneration air supply line, thus allowing selective supply of regeneration air to the vehicular air dryer. For instance, the regeneration air supply valve may be a pneumatic valve or a solenoid valve. Preferably, the regeneration air supply valve may be controllable by the control unit configured to control operation of the vehicular air dryer.

According to a third aspect of the present invention, there is provided a vehicle, in particular a commercial vehicle, comprising the pneumatic vehicle system according to the second aspect or any embodiment of the pneumatic vehicle system disclosed herein. The vehicle may be a motor vehicle of any type designed to transport people and/or cargo. In particular, the vehicle may be a commercial vehicle, i.e. a vehicle commercially used for carrying goods or fare-paying passengers. For instance, the commercial vehicle may be a truck or a bus. For commercial vehicles, the advantage of an improved pneumatic vehicle system may, due to the presence of pneumatic consumer systems with major compressed air consumption, significantly increase the operating efficiency of the vehicle. For instance, maintenance intervals may be reduced due to increased drying and regeneration efficiency of the vehicular air dryer which may lead to extended desiccant cartridge exchange intervals. Hence, the present invention may beneficially be applicable to commercial vehicles.

According to a fourth aspect of the present invention, there is provided a method of controlling a pneumatic vehicle system according to the second aspect or any embodiment of the pneumatic vehicle system disclosed herein, wherein the pneumatic vehicle system comprises at least one of a regeneration control valve arranged in the vehicular air dryer and a regeneration air supply valve arranged outside the vehicular air dryer,
wherein the method comprises:
- determining or receiving a regeneration airflow requirement; and
- providing a first control signal to the regeneration control valve and/or providing a second control signal to the regeneration air supply valve depending on the determined or received regeneration airflow requirement.
Hence, dryer-internal and/or dryer-external control valves may be used for flexible regeneration airflow control in at least one of at least two regeneration lines comprised by the vehicular air dryer in order to optimize regeneration processes. For instance, the first control signal and/or the second control signal may correspond to a presence or an absence of an actuation signal. For instance, the presence of an actuation signal may switch the regeneration control valve or of the regeneration air supply valve to an actuated state. For instance, the absence of an actuation signal may keep the regeneration control valve or of the regeneration air supply valve in a non-actuated state. Preferably, a reset of the regeneration control valve or of the regeneration air supply valve to the non-actuated state may be automatically effected by a return spring arranged in the regeneration control valve and/or in the regeneration air supply valve. With the method of controlling a pneumatic vehicle system according to the fourth aspect of the present invention, variable regeneration airflows may be provided upon demand, depending on a currently required regeneration air amount for optimized regeneration of the desiccant cartridge of the vehicular air dryer. For instance, a currently increased or decreased regeneration airflow requirement may be signaled or determined. For instance, the regeneration airflow requirement may be determined depending on a predefined cartridge cycle time, an estimated or determined cartridge degradation, a temperature condition or based on sensor data.

The above and other characteristics will become clear from the following description of illustrative, non-restrictive examples, which will be further outlined with reference to the appended drawings. The drawings are not necessarily to scale. Some features could be exaggerated or minimized to show details of particular components. Therefore, specific structural and functional details disclosed herein are not to be interpreted as limiting, but merely as a representative basis for teaching one skilled in the art.
- Fig. 1: is a pneumatic circuit representation of a vehicular air dryer according to a first embodiment.
- Fig. 2: is a pneumatic circuit representation of a vehicular air dryer according to a second embodiment.
- Fig. 3: is a pneumatic circuit representation of a vehicular air dryer according to a third embodiment.
- Fig. 4: is a pneumatic circuit representation of a vehicular air dryer according to a fourth embodiment.
- Fig. 5: is a pneumatic circuit representation of a vehicular air dryer according to a fifth embodiment.
- Fig. 6: is a schematic representation of a pneumatic vehicle system comprising a vehicular air dryer according to an embodiment.
- Fig. 7: is a schematic representation of a vehicle comprising a pneumatic vehicle system according to an embodiment.
- Fig. 8: is a simplified flow chart of a method of controlling a pneumatic vehicle system according to an embodiment.

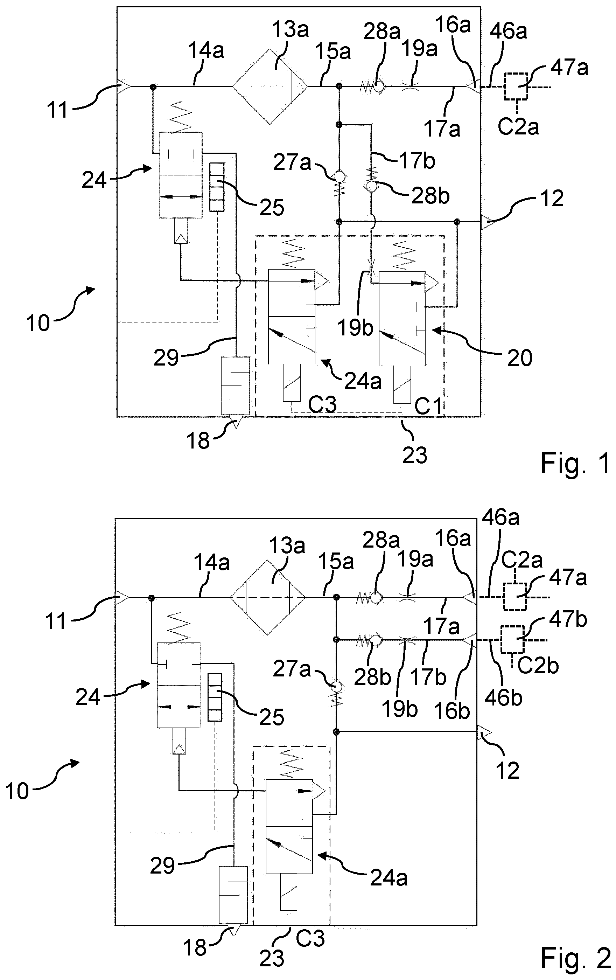

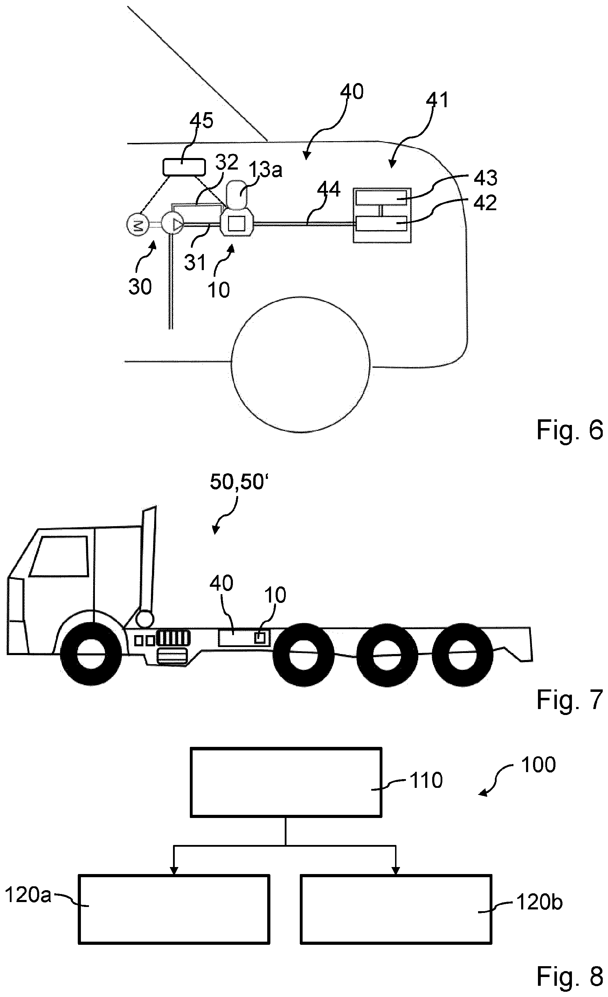

Fig. 1 provides a pneumatic circuit representation of a vehicular air dryer 10 according to a first embodiment. The vehicular air dryer 10 is configured to dry compressed air supplied by a compressor 30 (see Fig. 6) and to provide dried compressed air for a pneumatic consumer system 41 (see Fig. 6). In particular, the compressor 30, the vehicular air dryer 10 and the pneumatic consumer system 41 may form a pneumatic vehicle system 40 which may be arranged in a vehicle 50 as indicated in Fig. 7.

As apparent from Fig. 1, the vehicular air dryer 10 comprises a dryer inlet 11. The dryer inlet 11 is configured to receive air from a compressor discharge line 31 (see Fig. 6). Furthermore, the vehicular air dryer 10 comprises a dryer outlet 12 configured to supply dried air. In addition, the vehicular air dryer 10 comprises a dryer exhaust 18 being connected to ambient atmosphere. As depicted in Fig. 1, the vehicular air dryer 10 comprises a desiccant cartridge 13a being connected to the dryer inlet 11 via an inlet line 14a and to the dryer outlet 12 via an outlet line 15a. The desiccant cartridge 13a is configured to be selectively operated in a drying mode and in a regeneration mode. In the drying mode, the desiccant cartridge 13a is configured to receive and dry the air received at the dryer inlet 11 and to provide the dried air for outputting via the dryer outlet 12. In the regeneration mode, the desiccant cartridge 13a is configured to receive and humidify regeneration air, wherein the humidified regeneration air is vented via the dryer exhaust 18. The regeneration air may be received from a first regeneration port 16a via a first regeneration line 17a and/or from the outlet line 15a via a second regeneration line 17b configured as a bypass line for bypassing a first outlet check valve 27a arranged in the outlet line 15a.

The first regeneration line 17a connects the desiccant cartridge 13a with the first regeneration port 16a. A first regeneration airflow restriction element 19a is arranged in the first regeneration line 17a, thus providing precise airflow control and promoting defined regeneration air amount variation. Furthermore, a first regeneration check valve 28a is arranged in the first regeneration line 17a. The first regeneration port 16a may be configured to be connected to a first regeneration air supply line 46a as indicated in Fig. 1. A first regeneration air supply valve 47a may be arranged in the first regeneration air supply line 46a. The first regeneration air supply valve 47a may be configured to selectively open a fluid connection from a regeneration air source (not shown) to the first regeneration port 16a upon a second control signal C2a representing an actuation signal. The first regeneration air supply valve 47a may, for instance, be configured as a 2/2 way valve.

The second regeneration line 17b is connected to the outlet line 15a at a first position between the desiccant cartridge 13a and the first outlet check valve 27a and at a second position between the first outlet check valve 27a and the outlet 12, thus forming a bypass line bypassing the first outlet check valve 27a. A regeneration control valve 20 is arranged in the second regeneration line 17b. The regeneration control valve 20 may be configured to selectively open a fluid connection through the regeneration control valve 20 upon a first control signal C1 representing an actuation signal in order to let regeneration air pass from the outlet line 15a to the desiccant cartridge 13a via the second regeneration line 17b. The regeneration control valve 20 may be configured as a 2/2 way valve as illustrated in Fig. 1. The regeneration control valve 20 may be configured as a solenoid valve as depicted in Fig. 1. A second regeneration airflow restriction element 19b is arranged in the second regeneration line 17b, thus providing precise airflow control and promoting defined regeneration air amount variation. Furthermore, a second regeneration check valve 28b is arranged in the second regeneration line 17b.

Hence, the vehicular air dryer 10 according to the first embodiment depicted in Fig. 1 comprises two regeneration lines 17a, 17b which may selectively be used individually or in combination in order to provide a variable amount of regeneration air to the desiccant cartridge 13a operated in the regeneration mode by selectively providing the regeneration air to the desiccant cartridge 13a via at least one of the regeneration lines 17a, 17b. In particular, the vehicular air dryer 10 may use the outlet line 15a as an internal regeneration air source and/or the first regeneration port 16a being connected to an external regeneration air source such as a supply line 44 (see Fig. 6) connected to the dryer outlet 12, which may be branched off to the first regeneration air supply line 46a, thus providing a variable amount of regeneration air according to a current need for optimized regeneration of the desiccant cartridge 13a. Hence, a vehicular air dryer 10 with improved air drying efficiency, low complexity and adaptive operation is provided.

As apparent from Fig. 1, the vehicular air dryer 10 further comprises a purge line 29 connecting the inlet line 14a with the dryer exhaust 18. Via the purge line 29, the compressor discharge line 31 (see Fig. 6) may selectively be vented. Furthermore, the purge line 29 allows to vent the humidified regeneration air from the desiccant cartridge 13a being operated in the regeneration mode. A purge valve 24 is arranged in the purge line 29 to selectively open a fluid connection between the inlet line 14a and the dryer exhaust 18. The purge valve 24 may be configured as a 2/2 way valve as illustrated in Fig. 1. Optionally, a heater 25 may be provided close to the purge valve 24 and/or close to the purge line 29 for temperature control of vented humidified regeneration air. The purge valve 24 may be configured as a pneumatically controlled valve, wherein the vehicular air dryer 10 further comprises a purge control valve 24a configured to provide a pneumatic control signal to the purge valve 24 upon being actuated by a respective third control signal C3 representing an actuation signal. The purge control valve 24a may be configured as a solenoid valve as illustrated in Fig. 1. The vehicular air dryer 10 may comprise a common control signal port 23 for providing the first control signal C1 to the regeneration control valve 20 and the third control signal C3 to the purge control valve 24a. With a common control signal port 23, a compact control solution may be provided. The control signal port 23 may be configured as an electrical control signal port such as, e.g., an electrical socket. The control signal port 23 may be connected to a control unit 45 as schematically depicted in Fig. 6, wherein the control unit 45 may be configured as an electronic control unit (ECU). The regeneration control valve 20 and the purge control valve 24a may be connected to the common control signal port 23 via individual electrical connections, thus allowing to provide independent individual control signals to the regeneration control valve 20 and to the purge control valve 24a. Nevertheless, according to alternative options individual control signal ports may be provided for each of the regeneration control valve 20 and the purge control valve 24a.

As apparent from Fig. 1, none of the purge control valve 24a, the purge valve 24 and the regeneration control valve 20 is illustrated in an actuated state. Accordingly, the vehicular air dryer 10 represented in Fig. 1 is shown in a state in which the desiccant cartridge 13a may be operated in a drying mode, receiving compressed air at the dryer inlet 11 and providing dried air at the dryer outlet 12.

Fig. 2 provides a pneumatic circuit representation of a vehicular air dryer 10 according to a second embodiment. The structure and the operating principle of the vehicular air dryer 10 according to the second embodiment may essentially be comparable to the vehicular air dryer 10 according to the first embodiment depicted in Fig. 1. In contrast to the vehicular air dryer 10 according the first embodiment, the vehicular air dryer 10 according to the second embodiment comprises a first regeneration port 16a and a second regeneration port 16b, thus being configured to selectively provide regeneration air to the desiccant cartridge 13a via at least one of a first regeneration line 17a and a second regeneration line 17b connectable to dryer-external regeneration air sources via the first regeneration port 16a and the second regeneration port 16b. Although still providing the option to provide a variable amount of regeneration air via at least one of the first regeneration line 17a and the second regeneration line 17b, the vehicular air dryer 10 according to the second embodiment has the advantage of a reduced complexity since a dryer-internal bypass line with a regeneration control valve 20 arranged therein may be omitted. Accordingly, a single signal control port 23 may be arranged at the vehicular air dryer 10 for electrical control of the purge control valve 24a by providing a third control signal C3 to the purge control valve 24a.

As illustrated in Fig. 2, the second regeneration line 17b may be connected to the second regeneration port 16b. A second regeneration air supply line 46b may be connected to the second regeneration port 16b. A second regeneration air supply valve 47b may be arranged in the second regeneration air supply line 46b. The second regeneration air supply valve 47b may be configured to selectively open a fluid connection from the same or a further regeneration air source (not shown) to the second regeneration port 16b upon a second control signal C2b representing an actuation signal. The second regeneration air supply valve 47b may, for instance, be configured as a 2/2 way valve. A second regeneration airflow restriction element 19b is arranged in the second regeneration line 17b, thus providing precise airflow control and promoting defined regeneration air amount variation. Furthermore, a second regeneration check valve 28b is arranged in the second regeneration line 17b.

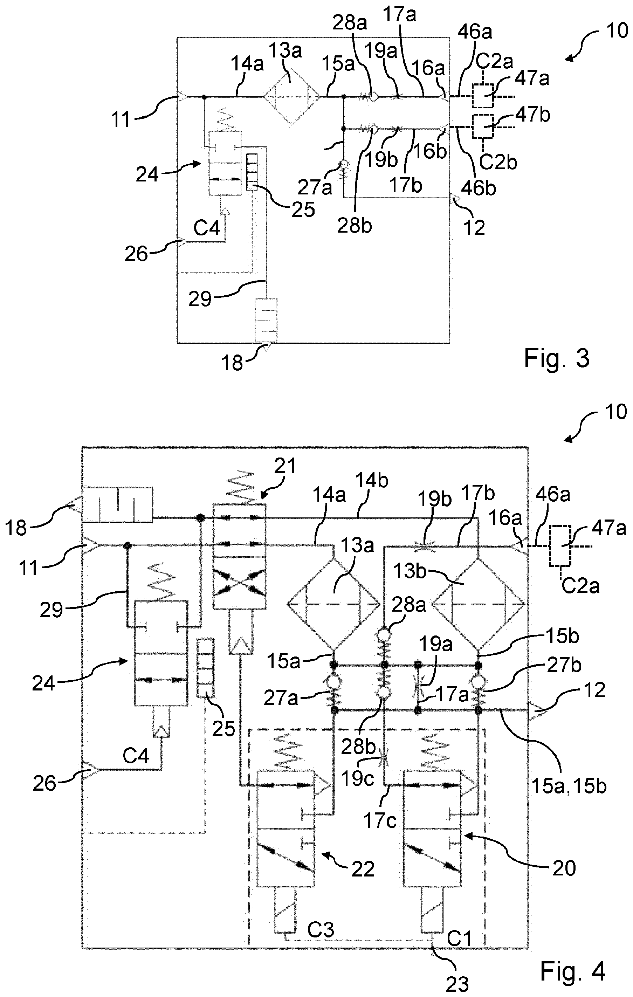

Fig. 3 provides a pneumatic circuit representation of a vehicular air dryer 10 according to a third embodiment. The structure and the operating principle of the vehicular air dryer 10 according to the third embodiment may essentially be comparable to the vehicular air dryer 10 according to the second embodiment depicted in Fig. 2. In contrast to the vehicular air dryer 10 according the second embodiment, the vehicular air dryer 10 according to the third embodiment comprises a purge valve control port 26 which may be connected to a compressor control line 32 (see Fig. 6) for controlling the purge valve 24 in coordination with the compressor operation. For instance, the compressor 30 set to an off-state may provide a fourth control signal C4 representing an actuation signal to the purge valve 24, thus setting the purge valve 24 to an actuated state in which humidified regeneration air may be vented from the desiccant cartridge 13a being operated in the regeneration mode. If the compressor 30 is set to an on-state, the purge valve 24 may return to a non-actuated state, thus preventing compressed air provided at the dryer inlet 11 being vented via the purge line 29 and the dryer exhaust 18. By providing a purge valve control port 26 for controlling the purge valve 24 in coordination with the compressor operation via the compressor control line 32, the purge control valve 24a according to the first and second embodiment of the vehicular air dryer 10 may be omitted and the complexity of the vehicular air dryer 10 may be reduced further.

Fig. 4 provides a pneumatic circuit representation of a vehicular air dryer 10 according to a fourth embodiment. The vehicular air dryer 10 is configured to dry compressed air supplied by a compressor 30 (see Fig. 6) and to provide dried compressed air for a pneumatic consumer system 41 (see Fig. 6). In particular, the compressor 30, the vehicular air dryer 10 and the pneumatic consumer system 41 may form a pneumatic vehicle system 40 which may be arranged in a vehicle 50 as indicated in Fig. 7. The vehicular air dryer 10 according to the fourth embodiment comprises a twin chamber configuration with a desiccant cartridge 13a and a further desiccant cartridge 13b. The desiccant cartridge 13a and the further desiccant cartridge 13b are configured to be alternately operated in the drying mode and in the regeneration mode.

As apparent from Fig. 4, the vehicular air dryer 10 comprises a dryer inlet 11. The dryer inlet 11 is configured to receive air from a compressor discharge line 31 (see Fig. 6). Furthermore, the vehicular air dryer 10 comprises a dryer outlet 12 configured to supply dried air. In addition, the vehicular air dryer 10 comprises a dryer exhaust 18 being connected to ambient atmosphere. As depicted in Fig. 4, the desiccant cartridge 13a is connectable to the dryer inlet 11 via an inlet line 14a and to the dryer outlet 12 via an outlet line 15a. The further desiccant cartridge 13b is connectable to the dryer inlet 11 via a further inlet line 14b and to the dryer outlet 12 via a further outlet line 15b. A switching valve 21, which may configured as a 4/2 way valve as depicted in Fig. 4, may be provided for selectively connecting the desiccant cartridge 13a with the dryer exhaust 18 and simultaneously connecting the further desiccant cartridge 13b with the dryer inlet 11 or connecting the desiccant cartridge 13a with the dryer inlet 11 and simultaneously connecting the further desiccant cartridge 13b with the dryer exhaust 18. The switching valve 21 may be configured as a pneumatically controllable valve, and it may be connected to a switching control valve 22 configured to provide a pneumatic control signal to the switching valve 21 upon being actuated by a respective third control signal C3 representing an actuation signal. The switching control valve 22 may be configured as a solenoid valve as depicted in Fig. 4. The switching control valve 22 may be configured as a 2/2 way valve as illustrated.

The desiccant cartridge 13a and the further desiccant cartridge 13b are configured to be alternately operated in the drying mode and in the regeneration mode. In the drying mode, the desiccant cartridge 13a and the further desiccant cartridge 13b are configured to receive and dry the air received at the dryer inlet 11 and to provide the dried air for outputting via the dryer outlet 12. In the regeneration mode, the desiccant cartridge 13a and the further desiccant cartridge 13b are configured to receive and humidify regeneration air, wherein the humidified regeneration air is vented via the dryer exhaust 18. The regeneration air may be received via a first regeneration line 17a configured as a bypass line for bypassing a first outlet check valve 27a arranged in the outlet line 15a and for bypassing a second outlet check valve 27b arranged in the further outlet line 15b. The first regeneration line 17a may receive dry regeneration air either from the desiccant cartridge 13a being operated in the drying mode or from the further desiccant cartridge 13b being operated in the drying mode, thus alternately providing regeneration air as a diverted airflow from the dried air provided by one of the desiccant cartridges 13a, 13b. The first regeneration line 17a may comprise a first regeneration airflow restriction element 19a, thus providing precise airflow control and promoting defined regeneration air amount variation.

As a further option, regeneration air may be received via a second regeneration line 17b connecting the desiccant cartridge 13a and the further desiccant cartridge 13b with a first regeneration port 16a. A second regeneration airflow restriction element 19b is arranged in the second regeneration line 17b, thus providing precise airflow control and promoting defined regeneration air amount variation. Furthermore, a first regeneration check valve 28a is arranged in the second regeneration line 17b. The first regeneration port 16a may be configured to be connected to a first regeneration air supply line 46a as indicated in Fig. 4. A first regeneration air supply valve 47a may be arranged in the first regeneration air supply line 46a. The first regeneration air supply valve 47a may be configured to selectively open a fluid connection from a regeneration air source (not shown) to the first regeneration port 16a upon a second control signal C2a representing an actuation signal. The first regeneration air supply valve 47a may, for instance, be configured as a 2/2 way valve.

As a further option, regeneration air may be received via a third regeneration line 17c configured as a further bypass line for bypassing the first outlet check valve 27a arranged in the outlet line 15a and for bypassing the second outlet check valve 27b arranged in the further outlet line 15b. A regeneration control valve 20 is arranged in the third regeneration line 17c. The regeneration control valve 20 may be configured to selectively open a fluid connection through the regeneration control valve 20 upon a first control signal C1 representing an actuation signal in order to let regeneration air pass from the outlet line 15a to the desiccant cartridge 13a and to the further desiccant cartridge 13b via the third regeneration line 17c. The regeneration control valve 20 may be configured as a 2/2 way valve as illustrated in Fig. 4. The regeneration control valve 20 may be configured as a solenoid valve as depicted in Fig. 4. A third regeneration airflow restriction element 19c is arranged in the third regeneration line 17c, further promoting defined regeneration air amount variation.

Furthermore, a second regeneration check valve 28b is arranged in the third regeneration line 17c.

Hence, the vehicular air dryer 10 according to the fourth embodiment depicted in Fig. 4 comprises three regeneration lines 17a, 17b, 17c which may selectively be used individually or in combination in order to provide a variable amount of regeneration air to the desiccant cartridge 13a and to the further desiccant cartridge 13b operated in the regeneration mode by selectively providing the regeneration air to the desiccant cartridge 13a and to the further desiccant cartridge 13b via at least one of the regeneration lines 17a, 17b, 17c. In particular, the vehicular air dryer 10 may use the outlet line 15a as an internal regeneration air source and/or the first regeneration port 16a being connected to an external regeneration air source such as a supply line 44 (see Fig. 6) connected to the dryer outlet 12 which may be branched off to the first regeneration air supply line 46a, thus providing a variable amount of regeneration air according to a current need for optimized regeneration of the desiccant cartridge 13a. Hence, a vehicular air dryer 10 with improved air drying efficiency, low complexity and adaptive operation is provided.

As apparent from Fig. 4, the vehicular air dryer 10 further comprises a purge line 29 for selectively connecting the inlet line 14a with the dryer exhaust 18. A purge valve 24 is arranged in the purge line 29 to selectively open a fluid connection between the inlet line 14a and the dryer exhaust 18. The purge valve 24 may be configured as a 2/2 way valve as illustrated in Fig. 4. Via the purge line 29 and the purge valve 24, the compressor discharge line 31 (see Fig. 6) may selectively be vented. For alternately venting the desiccant cartridge 13a and the further desiccant cartridge 13b being operated in the regeneration mode, the switching valve 21 may be used to alternately connect the desiccant cartridge 13a and the further desiccant cartridge 13b to the dryer exhaust 18 as apparent from Fig. 4.

Optionally, a heater 25 may be provided close to the purge valve 24 and/or close to the purge line 29 for temperature control of vented humidified regeneration air. The purge valve 24 may be configured as a pneumatically controlled valve, wherein the vehicular air dryer 10 further comprises a purge valve control port 26 which may be connected to a compressor control line 32 (see Fig. 6) for controlling the purge valve 24 in coordination with the compressor operation.

The vehicular air dryer 10 may comprise a common control signal port 23 for providing the first control signal C1 to the regeneration control valve 20 and the third control signal C3 to the switching control valve 22. With a common control signal port 23, a compact control solution may be provided. The control signal port 23 may be configured as an electrical control signal port such as, e.g., an electrical socket. The control signal port 23 may be connected to a control unit 45 as schematically depicted in Fig. 6, wherein the control unit 45 may be configured as an electronic control unit (ECU). The regeneration control valve 20 and the switching control valve 22 may be connected to the control signal port 23 via individual electrical connections, thus allowing to provide independent individual control signals to the regeneration control valve 20 and to the switching control valve 22. Nevertheless, according to alternative options individual control signal ports may be provided for each of the regeneration control valve 20 and the switching control valve 22.

According to the pneumatic state illustrated in Fig. 4, the switching valve 21 is shown in a first state in which the desiccant cartridge 13a is connected to the dryer inlet 11 and thus operated in the drying mode, while the further desiccant cartridge 13b is connected to the dryer exhaust 18 and thus operated in the regeneration mode. The first regeneration line 17a is configured as a permanently open regeneration line according to the depicted embodiment, representing a standard regeneration path. Accordingly, a basic quantity of regeneration air diverted from dried air being supplied from the desiccant cartridge 13a to the dryer outlet 12 via the outlet line 15a will be automatically provided to the further desiccant cartridge 13b via the first regeneration line 17a. Optionally, the amount of regeneration air may be increased by adding dryer-external regeneration air via the first regeneration port 16a and the second regeneration line 17b. Alternatively or in addition, the amount of regeneration air may be increased by actuating the regeneration control valve 20 and thus supplying further dried air being diverted from the outlet line 15a as regeneration air via the third regeneration line 17c. As a result, many variation options are provided to supply a specific amount of regeneration air to the desiccant cartridge 13a and to the further desiccant cartridge 13b for optimized regeneration.

Preferably, the first regeneration airflow restriction element 19a, the second regeneration airflow restriction element 19b and the third regeneration airflow restriction element 19c comprise restriction orifices of different sizes. For instance, the first regeneration airflow restriction element 19a may have a small orifice size, the second regeneration airflow restriction element 19b may have a large orifice size and the third regeneration airflow restriction element 19c may have an intermediate orifice size compared with each other. Using regeneration airflow restriction elements 19a, 19b, 19c with restriction orifices may provide a simple, effective and inexpensive solution for well-defined airflow control. Using restriction orifices of different sizes may enable significant increase or decrease of a resulting regeneration airflow depending on the selected regeneration line(s) 17a, 17b, 17c for variable regeneration air supply.

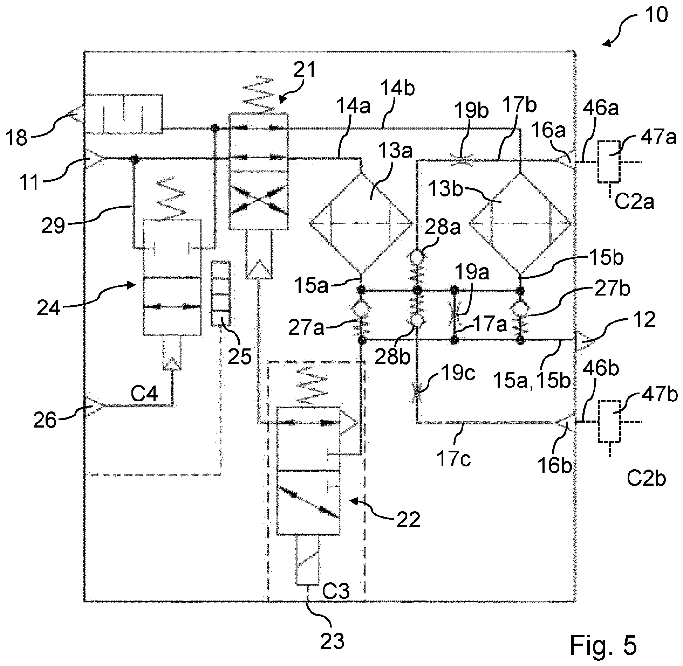

Fig. 5 provides a pneumatic circuit representation of a vehicular air dryer 10 according to a fifth embodiment. The structure and the operating principle of the vehicular air dryer 10 according to the fifth embodiment may essentially be comparable to the vehicular air dryer 10 according to the fourth embodiment depicted in Fig. 4. In contrast to the vehicular air dryer 10 according the fourth embodiment, the vehicular air dryer 10 according to the fifth embodiment comprises a first regeneration port 16a and a second regeneration port 16b, thus being configured to selectively provide regeneration air to the desiccant cartridge 13a and to the desiccant cartridge 13b via at least one of the first regeneration line 17a being configured as a bypass line for bypassing a first outlet check valve 27a arranged in the outlet line 15a and for bypassing a second outlet check valve 27b arranged in the further outlet line 15b, the second regeneration line 17b connectable to a dryer-external regeneration air source via the first regeneration port 16a and/or via the third regeneration line 17c connectable to the same or a further dryer-external regeneration air source via the second regeneration port 16b. Although still providing many options to provide a variable amount of regeneration air via at least one of the first regeneration line 17a, the second regeneration line 17b and the third regeneration line 17c, the vehicular air dryer 10 according to the fifth embodiment has the advantage of a reduced complexity since a further dryer-internal bypass line with a regeneration control valve 20 arranged therein may be omitted. Accordingly, a single signal control port 23 may be arranged at the vehicular air dryer 10 for electrical control of the switching control valve 22 by providing a third control signal C3 to the switching control valve 22.

As illustrated in Fig. 5, the third regeneration line 17b may be connected to the second regeneration port 16b. A second regeneration air supply line 46b may be connected to the second regeneration port 16b. A second regeneration air supply valve 47b may be arranged in the second regeneration air supply line 46b. The second regeneration air supply valve 47b may be configured to selectively open a fluid connection from the same or a further regeneration air source (not shown) to the second regeneration port 16b upon a second control signal C2b representing an actuation signal. The second regeneration air supply valve 47b may, for instance, be configured as a 2/2 way valve. A third regeneration airflow restriction element 19c is arranged in the third regeneration line 17c. Furthermore, a second regeneration check valve 28b is arranged in the third regeneration line 17c.

Fig. 6 is a schematic view of a pneumatic vehicle system 40. The pneumatic vehicle system 40 comprises a vehicular air dryer 10 according to any aspect or embodiment disclosed herein. The vehicular air dryer 10 comprises at least one desiccant cartridge 13a. The pneumatic vehicle system 40 furthermore comprises a compressor 30, a compressor discharge line 31 connected to a discharge port of the compressor 30 and to a dryer inlet 11 of the vehicular air dryer 10, and a compressor control line 32 which may be connected to a purge valve control port 26 as for instance described with reference to the third, fourth and fifth embodiment of the vehicular air dryer 10. The compressor 30, in particular a drive control of the compressor 30, and the vehicular air dryer 10 may be connected to a common control unit 45 via at least one control signal connection. The control unit 45 may be configured as an electronic control unit (ECU) and it may be configured to provide at least one electrical control signal to at least one solenoid valve implemented in the vehicular air dryer 10.

The pneumatic vehicle system 40 comprises a pneumatic consumer system 41 with a buffer 42 and a pneumatic consumer 43. The pneumatic consumer system 41 is in fluid communication with, and may be directly connected to, a supply line 44 connected to the dryer outlet 12 of the vehicular air dryer 10. The pneumatic consumer 41 may, for instance, be configured as a pneumatic braking unit, a levelling unit, a tire inflation unit or a sensor cleaning unit.

Fig. 7 provides a schematic representation of a vehicle 50 being configured as a commercial vehicle 50', here implemented as a truck. The vehicle 50 comprises a pneumatic vehicle system 40 with a vehicular air dryer 10 according to any aspect or embodiment disclosed herein. For commercial vehicles 50', the advantage of an improved pneumatic vehicle system 40 may, due to the presence of pneumatic consumer systems 41 with major compressed air consumption, significantly increase the operating efficiency of the vehicle 50. For instance, maintenance intervals may be reduced due to increased drying and regeneration efficiency of the vehicular air dryer 10 which may lead to extended desiccant cartridge exchange intervals.

Fig. 8 provides a simplified flow chart representing a method 100 of controlling a pneumatic vehicle system 40 according to any aspect or embodiment disclosed herein. The pneumatic vehicle system 40 comprises at least one of a regeneration control valve 20 arranged in the vehicular air dryer 10 and a regeneration air supply valve 47a, 47b arranged outside the vehicular air dryer 10. The method comprises a first step 110 of determining or receiving a regeneration airflow requirement. In second steps 120a, 120b following the first step 110, a first control signal C1 may be provided to the regeneration control valve 20 and/or a second control signal C2a, C2b may be provided to the regeneration air supply valve 47a, 47b depending on the determined or received regeneration airflow requirement. Hence, variable regeneration airflows may be provided upon demand with adapted regeneration air amounts in order to optimize regeneration processes.

### List of reference numerals (part of the application):

- 10: vehicular air dryer
- 11: dryer inlet
- 12: dryer outlet
- 13a: desiccant cartridge
- 13b: further desiccant cartridge
- 14a: inlet line
- 14b: further inlet line
- 15a: outlet line
- 15b: further outlet line
- 16a: first regeneration port
- 16b: second regeneration port
- 17a: first regeneration line
- 17b: second regeneration line
- 17c: third regeneration line
- 18: dryer exhaust
- 19a: first regeneration airflow restriction element
- 19b: second regeneration airflow restriction element
- 19c: third regeneration airflow restriction element
- 20: regeneration control valve
- 21: switching valve
- 22: switching control valve
- 23: control signal port
- 24: purge valve
- 24a: purge control valve
- 25: heater
- 26: purge valve control port
- 27a: outlet check valve
- 27b: further outlet check valve
- 28a: first regeneration check valve
- 28b: second regeneration check valve
- 29: purge line
- 30: compressor
- 31: compressor discharge line
- 32: compressor control line
- 40: pneumatic vehicle system
- 41: pneumatic consumer system
- 42: buffer
- 43: pneumatic consumer
- 44: supply line
- 45: control unit
- 46a: first regeneration air supply line
- 46b: second regeneration air supply line
- 47a: first regeneration air supply valve
- 47b: second regeneration air supply valve
- 50: vehicle
- 50': commercial vehicle
- 100: method of controlling a pneumatic vehicle system
- 110: determining or receiving a regeneration airflow requirement
- 120a: providing a first control signal to the regeneration control valve
- 120b: providing a second control signal to the regeneration air supply valve
- C1: first control signal
- C2a: second control signal to first regeneration air supply valve
- C2b: second control signal to second regeneration air supply valve
- C3: third control signal
- C4: fourth control signal

## Claims

1. A vehicular air dryer (10), comprising:
- a dryer inlet (11) configured to receive air from a compressor discharge line (31),
- a dryer outlet (12) configured to supply dried air,
- a dryer exhaust (18),
- a desiccant cartridge (13a) connected or connectable to the dryer inlet (11) via an inlet line (14a) and to the dryer outlet (12) via an outlet line (15a), the desiccant cartridge (13a) being configured to be selectively operated in a drying mode and in a regeneration mode, wherein
∘ in the drying mode, the desiccant cartridge (13a) is configured to receive and dry the air from the dryer inlet (11) and to provide the dried air for outputting via the dryer outlet (12), and
∘ in the regeneration mode, the desiccant cartridge (13a) is configured to receive and humidify regeneration air from the outlet line (15a) and/or from a regeneration port (16a, 16b) via a regeneration line (17a, 17b, 17c) and to vent humidified regeneration air via the dryer exhaust (18),
wherein the vehicular air dryer (10) comprises at least two regeneration lines (17a, 17b, 17c) and **characterized in that** the vehicular air dryer (10) is configured to provide a variable amount of regeneration air to the desiccant cartridge (13a) operated in the regeneration mode by selectively providing the regeneration air to the desiccant cartridge (13a) via at least one of the regeneration lines (17a, 17b, 17c).

2. The vehicular air dryer (10) according to claim 1, wherein at least one of the regeneration lines (17a, 17b, 17c) comprises a regeneration airflow restriction element (19a, 19b, 19c) arranged therein.

3. The vehicular air dryer (10) according to claim 2, wherein the vehicular air dryer (10) comprises:
- a first regeneration line (17a) having a first regeneration airflow restriction element (19a) arranged therein, and
- a second regeneration line (17b) having a second regeneration airflow restriction element (19b) arranged therein,
wherein the vehicular air dryer (10) is configured to selectively provide regeneration air to the desiccant cartridge (13a) operated in the regeneration mode via the first regeneration airflow restriction element (19a) arranged in the first regeneration line (17a) and/or via the second regeneration airflow restriction element (19b) arranged in the second regeneration line (17b).

4. The vehicular air dryer (10) according to claim 3, wherein the vehicular air dryer (10) comprises a third regeneration line (17c) having a third regeneration airflow restriction element (19c) arranged therein and wherein the vehicular air dryer (10) is configured to selectively provide regeneration air to the desiccant cartridge (13a) operated in the regeneration mode via the first regeneration airflow restriction element (19a) arranged in the first regeneration line (17a), via the second regeneration airflow restriction element (19b) arranged in the second regeneration line (17b) and/or via the third regeneration airflow restriction element (19c) arranged in the third regeneration line (17c).

5. The vehicular air dryer (10) according to claim 3 or 4, wherein at least one of the first regeneration airflow restriction element (19a), the second regeneration airflow restriction element (19b) and the third regeneration airflow restriction element (19c) comprises a restriction orifice.

6. The vehicular air dryer (10) according to claim 5, wherein at least two regeneration airflow restriction elements (19a, 19b, 19c) of the first regeneration airflow restriction element (19a), the second regeneration airflow restriction element (19b) and the third regeneration airflow restriction element (19c) each comprise a restriction orifice, wherein the restriction orifices of the at least two regeneration airflow restriction elements (19a, 19b, 19c) have different orifice sizes.

7. The vehicular air dryer (10) according to any preceding claim, wherein at least one of the first regeneration line (17a), the second regeneration line (17b) and the third regeneration line (17c) is configured as a bypass line of the outlet line (15a).

8. The vehicular air dryer (10) according to any preceding claim, wherein at least one of the first regeneration line (17a), the second regeneration line (17b) and the third regeneration line (17c) is connected to a regeneration port (16a, 16b) of the vehicular air dryer (10).

9. The vehicular air dryer (10) according to any preceding claim, wherein at least one of the first regeneration line (17a), the second regeneration line (17b) and the third regeneration line (17c) comprises a regeneration control valve (20) arranged therein.

10. The vehicular air dryer (10) according to any preceding claim, wherein the vehicular air dryer (10) comprises a further desiccant cartridge (13b) connected or connectable to the dryer inlet (11) via a further inlet line (14b) and to the dryer outlet (12) via a further outlet line (15b), wherein the desiccant cartridge (13a) and the further desiccant cartridge (13b) are configured to be alternately operated in the drying mode and in the regeneration mode and wherein the vehicular air dryer (10) is configured to selectively provide regeneration air to the desiccant cartridge (13a) or to the further desiccant cartridge (13b) via at least one of the regeneration lines (17a, 17b, 17c).

11. The vehicular air dryer (10) according to any preceding claim, wherein the vehicular air dryer (10) comprises at least two of a purge valve (24), a regeneration control valve (20) and a switching valve (21), wherein the vehicular air dryer (10) comprises a common control signal port (23) for controlling at least two of the purge valve (24), the regeneration control valve (20) and the switching valve (21).

12. A pneumatic vehicle system (40), comprising:
- a compressor (30),
- the vehicular air dryer (10) according to any preceding claim,
- a pneumatic consumer system (41),
- a compressor discharge line (31) connected to a discharge port of the compressor (30) and the dryer inlet (11),
- a supply line (44) connected to the dryer outlet (12) and the pneumatic consumer system (41), and
- a control unit (45) configured to control operation of the vehicular air dryer (10).

13. The pneumatic vehicle system (40) according to claim 12, further comprising:
- a regeneration air supply line (46a, 46b) connected to a regeneration port (16a, 16b) of the vehicular air dryer (10) and being configured to selectively provide regeneration air to the regeneration port (16a, 16b).

14. A vehicle (50), in particular a commercial vehicle (50'), comprising the pneumatic vehicle system (40) according to claim 12 or 13.

15. A method (100) of controlling a pneumatic vehicle system (40) according to claim 12 or 13, wherein the pneumatic vehicle system (40) comprises at least one of a regeneration control valve (20) arranged in the vehicular air dryer (10) and a regeneration air supply valve (47a, 47b) arranged outside the vehicular air dryer (10), wherein the method (100) comprises:
- determining or receiving a regeneration airflow requirement (110); and
- providing a first control signal (C1) to the regeneration control valve (20) (120a) and/or providing a second control signal (C2a, C2b) to the regeneration air supply valve (47a, 47b) (120b) depending on the determined or received regeneration airflow requirement.

## Patentansprüche

1. Fahrzeuglufttrockner (10), umfassend:
- einen Trocknereinlass (11), der konfiguriert ist, um Luft aus einer Kompressorauslassleitung (31) aufzunehmen,
- einen Trocknerauslass (12), der konfiguriert ist, um getrocknete Luft zuzuführen,
- einen Trocknerabluftkanal (18),
- eine Trockenmittelkartusche (13a), die über einen Einlassleitung (14a) mit dem Trocknereinlass (11) und über eine Auslassleitung (15a) mit dem Trocknerauslass (12) verbunden oder verbindbar ist, wobei die Trockenmittelkartusche (13a) konfiguriert ist, um selektiv in einem Trocknungsmodus und in einem Regenerationsmodus betrieben zu werden, wobei
∘ in dem Trocknungsmodus die Trockenmittelkartusche (13a) konfiguriert ist, um die Luft von dem Trocknereinlass (11) aufzunehmen und zu trocknen und die getrocknete Luft zur Ausgabe über den Trocknerauslass (12) bereitzustellen, und
∘ in dem Regenerationsmodus die Trockenmittelkartusche (13a) konfiguriert ist, um Regenerationsluft aus der Auslassleitung (15a) und/oder aus einem Regenerationsanschluss (16a, 16b) über eine Regenerationsleitung (17a, 17b, 17c) aufzunehmen und zu befeuchten und befeuchtete Regenerationsluft über den Trocknerauslass (18) abzulassen,
wobei der Fahrzeuglufttrockner (10) mindestens zwei Regenerationsleitungen (17a, 17b, 17c) umfasst und
**dadurch gekennzeichnet ist, dass**
der Fahrzeuglufttrockner (10) konfiguriert ist, um der in dem Regenerationsmodus betriebenen Trockenmittelkartusche (13a) eine variable Menge an Regenerationsluft bereitzustellen, indem die Regenerationsluft der Trockenmittelkartusche (13a) über mindestens eine der Regenerationsleitungen (17a, 17b, 17c) selektiv bereitgestellt wird.

2. Fahrzeuglufttrockner (10) nach Anspruch 1, wobei mindestens eine der Regenerationsleitungen (17a, 17b, 17c) ein darin angeordnetes Regenerationsluftstrombegrenzungselement (19a, 19b, 19c) umfasst.

3. Fahrzeuglufttrockner (10) nach Anspruch 2, wobei der Fahrzeuglufttrockner (10) umfasst:
- eine erste Regenerationsleitung (17a) mit einem darin angeordneten ersten Regenerationsluftstrombegrenzungselement (19a), und
- eine zweite Regenerationsleitung (17b) mit einem darin angeordneten zweiten Regenerationsluftstrombegrenzungselement (19b),
wobei der Fahrzeuglufttrockner (10) konfiguriert ist, um der in dem Regenerationsmodus betriebenen Trockenmittelkartusche (13a) selektiv Regenerationsluft über das in der ersten Regenerationsleitung (17a) angeordnete erste Regenerationsluftstrombegrenzungselement (19a) und/oder über das in der zweiten Regenerationsleitung (17b) angeordnete zweite Regenerationsluftstrombegrenzungselement (19b) bereitzustellen.

4. Fahrzeuglufttrockner (10) nach Anspruch 3, wobei der Fahrzeuglufttrockner (10) eine dritte Regenerationsleitung (17c) mit einem darin angeordneten dritten Regenerationsluftstrombegrenzungselement (19c) umfasst und wobei der Fahrzeuglufttrockner (10) konfiguriert ist, um der in dem Regenerationsmodus betriebenen Trockenmittelkartusche (13a) selektiv Regenerationsluft über das in der ersten Regenerationsleitung (17a) angeordnete erste Regenerationsluftstrombegrenzungselement (19a), über das in der zweiten Regenerationsleitung (17b) angeordnete zweite Regenerationsluftstrombegrenzungselement (19b) und/oder über das in der dritten Regenerationsleitung (17c) angeordnete dritte Regenerationsluftstrombegrenzungselement (19c) bereitzustellen.

5. Fahrzeuglufttrockner (10) nach Anspruch 3 oder 4, wobei mindestens eines des ersten Regenerationsluftstrombegrenzungselements (19a), des zweiten Regenerationsluftstrombegrenzungselements (19b) und des dritten Regenerationsluftstrombegrenzungselements (19c) eine Begrenzungsöffnung umfasst.

6. Fahrzeuglufttrockner (10) nach Anspruch 5, wobei mindestens zwei Regenerationsluftstrombegrenzungselemente (19a, 19b, 19c) des ersten Regenerationsluftstrombegrenzungselements (19a), des zweiten Regenerationsluftstrombegrenzungselements (19b) und des dritten Regenerationsluftstrombegrenzungselements (19c) jeweils eine Begrenzungsöffnung umfassen, wobei die Begrenzungsöffnungen der mindestens zwei Regenerationsluftstrombegrenzungselemente (19a, 19b, 19c) unterschiedliche Öffnungsgrößen aufweisen.

7. Fahrzeuglufttrockner (10) nach einem der vorstehenden Ansprüche, wobei mindestens eine der ersten Regenerationsleitung (17a), der zweiten Regenerationsleitung (17b) und der dritten Regenerationsleitung (17c) als eine Bypassleitung der Auslassleitung (15a) konfiguriert ist.

8. Fahrzeuglufttrockner (10) nach einem der vorstehenden Ansprüche, wobei mindestens eine der ersten Regenerationsleitung (17a), der zweiten Regenerationsleitung (17b) und der dritten Regenerationsleitung (17c) mit einem Regenerationsanschluss (16a, 16b) des Fahrzeuglufttrockners (10) verbunden ist.

9. Fahrzeuglufttrockner (10) nach einem der vorstehenden Ansprüche, wobei mindestens eine der ersten Regenerationsleitung (17a), der zweiten Regenerationsleitung (17b) und der dritten Regenerationsleitung (17c) ein darin angeordnetes Regenerationssteuerventil (20) umfasst.

10. Fahrzeuglufttrockner (10) nach einem der vorstehenden Ansprüche, wobei der Fahrzeuglufttrockner (10) eine weitere Trockenmittelkartusche (13b) umfasst, die über eine weitere Einlassleitung (14b) mit dem Trocknereinlass (11) und über eine weitere Auslassleitung (15b) mit dem Trocknerauslass (12) verbunden oder verbindbar ist, wobei die Trockenmittelkartusche (13a) und die weitere Trockenmittelkartusche (13b) konfiguriert sind, um abwechselnd in dem Trocknungsmodus und in dem Regenerationsmodus betrieben zu werden, und wobei der Fahrzeuglufttrockner (10) konfiguriert ist, um der Trockenmittelkartusche (13a) oder der weiteren Trockenmittelkartusche (13b) über mindestens eine der Regenerationsleitungen (17a, 17b, 17c) selektiv Regenerationsluft bereitzustellen.

11. Fahrzeuglufttrockner (10) nach einem der vorstehenden Ansprüche, wobei der Fahrzeuglufttrockner (10) mindestens zwei von einem Spülventil (24), einem Regenerationssteuerventil (20) und einem Schaltventil (21) umfasst, wobei der Fahrzeuglufttrockner (10) einen gemeinsamen Steuersignalanschluss (23) zum Steuern von mindestens zwei von dem Spülventil (24), dem Regenerationssteuerventil (20) und dem Schaltventil (21) umfasst.

12. Pneumatisches Fahrzeugsystem (40), umfassend:
- einen Kompressor (30),
- den Fahrzeuglufttrockner (10) nach einem der vorstehenden Ansprüche,
- ein pneumatisches Verbrauchersystem (41),
- eine Kompressorauslassleitung (31), die mit einem Auslassanschluss des Kompressors (30) und dem Trocknereinlass (11) verbunden ist,
- eine Zuleitung (44), die mit dem Trocknerauslass (12) und dem pneumatischen Verbrauchersystem (41) verbunden ist, und
- eine Steuereinheit (45), die konfiguriert ist, um den Betrieb des Fahrzeuglufttrockners (10) zu steuern.

13. Pneumatisches Fahrzeugsystem (40) nach Anspruch 12, ferner umfassend:
- eine Regenerationsluftzuleitung (46a, 46b), die mit einem Regenerationsanschluss (16a, 16b) des Fahrzeuglufttrockners (10) verbunden ist und konfiguriert ist, um dem Regenerationsanschluss (16a, 16b) selektiv Regenerationsluft bereitzustellen.

14. Fahrzeug (50), insbesondere ein Nutzfahrzeug (50'), umfassend das pneumatische Fahrzeugsystem (40) nach Anspruch 12 oder 13.

15. Verfahren (100) zur Steuerung eines pneumatischen Fahrzeugsystems (40) nach Anspruch 12 oder 13, wobei das pneumatische Fahrzeugsystem (40) mindestens eines von einem Regenerationssteuerventil (20), das in dem Fahrzeuglufttrockner (10) angeordnet ist, und einem Regenerationsluftzufuhrventil (47a, 47b), das außerhalb des Fahrzeuglufttrockners (10) angeordnet ist, umfasst, wobei das Verfahren (100) umfasst:
- Bestimmen oder Empfangen einer Regenerationsluftstromanforderung (110); und
- Bereitstellen eines ersten Steuersignals (C1) an das Regenerationssteuerventil (20) (120a) und/oder Bereitstellen eines zweiten Steuersignals (C2a, C2b) an das Regenerationsluftzufuhrventil (47a, 47b) (120b) in Abhängigkeit von der bestimmten oder empfangenen Regenerationsluftstromanforderung.

## Revendications

1. Dessiccateur d'air pour véhicule (10), comprenant :
- une entrée de sécheur (11) conçue pour recevoir de l'air provenant d'une conduite de refoulement de compresseur (31),
- une sortie de sécheur (12) conçue pour fournir de l'air sec,
- un échappement de sécheur (18),
- une cartouche déshydratante (13a) raccordée ou pouvant être raccordée à l'entrée du sécheur (11) par l'intermédiaire d'une conduite d'entrée (14a) et à la sortie du sécheur (12) par le biais d'une conduite de sortie (15a), la cartouche déshydratante (13a) étant conçue pour fonctionner sélectivement dans un mode de séchage et dans un mode de régénération, dans lequel
∘ dans le mode de séchage, la cartouche déshydratante (13a) est conçue pour recevoir et sécher l'air provenant de l'entrée du sécheur (11) et pour fournir l'air sec en vue de sa sortie par le biais de la sortie de sécheur (12), et
∘ dans le mode de régénération, la cartouche déshydratante (13a) est conçue pour recevoir et humidifier l'air de régénération provenant de la conduite de sortie (15a) et/ou d'un orifice de régénération (16a, 16b) par le biais d'une conduite de régénération (17a, 17b, 17c) et pour évacuer l'air de régénération humidifié par le biais de l'échappement de sécheur (18),
dans lequel le dessiccateur d'air pour véhicule (10) comprend au moins deux lignes de régénération (17a, 17b, 17c) et **caractérisé en ce que**
le dessiccateur d'air pour véhicule (10) est conçu pour fournir une quantité variable d'air de régénération à la cartouche de desséchant (13a) fonctionnant dans le mode de régénération en fournissant sélectivement l'air de régénération à la cartouche déshydratante (13a) par le biais d'au moins l'une des conduites de régénération (17a, 17b, 17c).

2. Dessiccateur d'air pour véhicule (10) selon la revendication 1, dans lequel au moins l'une des conduites de régénération (17a, 17b, 17c) comprend un élément de restriction d'écoulement d'air de régénération (19a, 19b, 19c) agencé dans celle-ci.

3. Dessiccateur d'air pour véhicule (10) selon la revendication 2, dans lequel le dessiccateur d'air pour véhicule (10) comprend :
- une première conduite de régénération (17a) dans laquelle est agencé un premier élément de restriction d'écoulement d'air de régénération (19a), et
- une deuxième conduite de régénération (17b) comportant un deuxième élément de restriction d'écoulement d'air de régénération (19b) agencé dans celle-ci,
dans lequel le dessiccateur d'air pour véhicule (10) est conçu pour fournir sélectivement de l'air de régénération à la cartouche déshydratante (13a) fonctionnant dans le mode de régénération par le biais du premier élément de restriction d'écoulement d'air de régénération (19a) agencé dans la première conduite de régénération (17a) et/ou par le biais du deuxième élément de restriction d'écoulement d'air de régénération (19b) agencé dans la deuxième conduite de régénération (17b).

4. Dessiccateur d'air pour véhicule (10) selon la revendication 3, dans lequel le dessiccateur d'air pour véhicule (10) comprend une troisième conduite de régénération (17c) dans laquelle est agencé un troisième élément de restriction d'écoulement d'air de régénération (19c) et dans lequel le dessiccateur d'air pour véhicule (10) est conçu pour fournir sélectivement de l'air de régénération à la cartouche déshydratante (13a) fonctionnant dans le mode de régénération par le biais du premier élément de restriction d'écoulement d'air de régénération (19a) agencé dans la première conduite de régénération (17a), par le biais du deuxième élément de restriction d'écoulement d'air de régénération (19b) agencé dans la deuxième conduite de régénération (17b) et/ou par le biais du troisième élément de restriction d'écoulement d'air de régénération (19c) agencé dans la troisième conduite de régénération (17c).

5. Dessiccateur d'air pour véhicule (10) selon la revendication 3 ou 4, dans lequel au moins l'un parmi le premier élément de restriction d'écoulement d'air de régénération (19a), le deuxième élément de restriction d'écoulement d'air de régénération (19b) et le troisième élément de restriction d'écoulement d'air de régénération (19c) comprend un orifice de restriction.

6. Dessiccateur d'air pour véhicule (10) selon la revendication 5, dans lequel au moins deux éléments de restriction d'écoulement d'air de régénération (19a, 19b, 19c) parmi le premier élément de restriction d'écoulement d'air de régénération (19a), le deuxième élément de restriction d'écoulement d'air de régénération (19b) et le troisième élément de restriction d'écoulement d'air de régénération (19c) comprennent chacun un orifice de restriction, dans lequel les orifices de restriction des au moins deux éléments de restriction d'écoulement d'air de régénération (19a, 19b, 19c) présentent des tailles d'orifice différentes.

7. Dessiccateur d'air pour véhicule (10) selon l'une quelconque des revendications précédentes, dans lequel au moins l'une parmi la première conduite de régénération (17a), la deuxième conduite de régénération (17b) et la troisième conduite de régénération (17c) est conçue comme une conduite de dérivation de la conduite de sortie (15a).

8. Dessiccateur d'air pour véhicule (10) selon l'une quelconque des revendications précédentes, dans lequel au moins l'une parmi la première conduite de régénération (17a), la deuxième conduite de régénération (17b) et la troisième conduite de régénération (17c) est raccordée à un orifice de régénération (16a, 16b) du dessiccateur d'air pour véhicule (10).

9. Dessiccateur d'air pour véhicule (10) selon l'une quelconque des revendications précédentes, dans lequel au moins l'une parmi la première conduite de régénération (17a), la deuxième conduite de régénération (17b) et la troisième conduite de régénération (17c) comprend une soupape de commande de régénération (20) agencée dans celle-ci.

10. Dessiccateur d'air pour véhicule (10) selon l'une quelconque des revendications précédentes, dans lequel le dessiccateur d'air pour véhicule (10) comprend une cartouche de desséchant supplémentaire (13b) raccordée ou pouvant être raccordée à l'entrée de dessiccateur (11) par le biais d'une conduite d'entrée supplémentaire (14b) et à la sortie de dessiccateur (12) par le biais d'une conduite de sortie supplémentaire (15b), dans lequel la cartouche déshydratante (13a) et la cartouche déshydratante supplémentaire (13b) sont conçues pour fonctionner alternativement dans le mode de séchage et dans le mode de régénération et dans lequel le dessiccateur d'air pour véhicule (10) est configuré pour fournir sélectivement de l'air de régénération à la cartouche déshydratante (13a) ou à la cartouche déshydratante supplémentaire (13b) par le biais d'au moins l'une des conduites de régénération (17a, 17b, 17c).

11. Dessiccateur d'air pour véhicule (10) selon l'une quelconque des revendications précédentes, dans lequel le dessiccateur d'air pour véhicule (10) comprend au moins deux éléments parmi une soupape de purge (24), une soupape de commande de régénération (20) et une soupape de commutation (21), dans lequel le dessiccateur d'air pour véhicule (10) comprend un orifice de signal de commande commun (23) pour commander au moins deux éléments parmi la soupape de purge (24), la soupape de commande de régénération (20) et la soupape de commutation (21).

12. Système de frein pneumatique (40) comprenant :
- un compresseur (30),
- le dessiccateur d'air pour véhicule (10) selon l'une quelconque des revendications précédentes,
- un système consommateur pneumatique (41),
- une conduite de refoulement de compresseur (31) raccordée à un orifice de refoulement du compresseur (30) et à l'entrée du sécheur (11),
- une conduite d'alimentation (44) raccordée à la sortie du sécheur (12) et au système consommateur pneumatique (41), et
- une unité de commande (45) configurée pour commander le fonctionnement du sécheur d'air de véhicule (10).

13. Système de véhicule pneumatique (40) selon la revendication 12, comprenant en outre :
- une conduite d'alimentation en air de régénération (46a, 46b) raccordée à un orifice de régénération (16a, 16b) du dessiccateur d'air de véhicule (10) et étant conçue pour fournir sélectivement de l'air de régénération à l'orifice de régénération (16a, 16b).

14. Véhicule (50), en particulier un véhicule utilitaire (50'), comprenant un système de freinage pneumatique (40) selon la revendication 12 ou 13.

15. Procédé (100) de commande d'un système pneumatique de véhicule (40) selon la revendication 12 ou 13, dans lequel le système pneumatique de véhicule (40) comprend au moins l'une parmi une soupape de commande de régénération (20) agencée dans le dessiccateur d'air de véhicule (10) et une soupape d'alimentation en air de régénération (47a, 47b) agencée à l'extérieur du dessiccateur d'air de véhicule (10), dans lequel le procédé (100) comprend :
- la détermination ou la réception d'une exigence d'écoulement d'air de régénération (110) ; et
- la fourniture d'un premier signal de commande (C1) à la soupape de commande de régénération (20) (120a) et/ou la fourniture d'un second signal de commande (C2a, C2b) à la soupape d'alimentation en air de régénération (47a, 47b) (120b) en fonction du besoin en écoulement d'air de régénération déterminé ou reçu.
